# FASCICULE DE BREVET EUROPEEN

(11) **EP 3 108 524 B1**
(45) Date de publication et mention de la délivrance du brevet: **18.12.2019**
(21) Numéro de dépôt: 15706452.8
(22) Date de dépôt: 20.02.2015
(51) Int. Cl.: H01M 4/136, H01M 4/1397, H01M 4/38, H01M 4/58, H01M 4/62, H01M 4/66, H01M 4/70, H01M 10/052, H01M 10/0568, H01M 10/0569

(54) **ELECTRODE POSITIVE POUR ACCUMULATEUR ELECTROCHIMIQUE LITHIUM-SOUFRE PRESENTANT UNE STRUCTURATION SPECIFIQUE**
POSITIVE ELEKTRODE FÜR ELEKTROCHEMISCHEN LITHIUM-SCHWEFEL-AKKUMULATIR MIT EINER SPEZIFISCHEN STRUKTUR
POSITIVE ELECTRODE FOR LITHIUM-SULPHUR ELECTROCHEMICAL ACCUMULATOR HAVING A SPECIFIC STRUCTURE

(30) Priorité: 21.02.2014 FR 1451407
(43) Date de publication de la demande: 28.12.2016
(73) Titulaire: Commissariat à l'Énergie Atomique et aux Énergies Alternatives, 75015 Paris (FR)
(72) Inventeur: LIATARD, Sébastien, F-38330 Montbonnot (FR); BARCHASZ, Céline, F-38600 Fontaine (FR); DIJON, Jean, F-38800 Champagnier (FR)
(74) Mandataire: Brevalex
(86) Numéro de dépôt international: PCT/EP2015/053650
(87) Numéro de publication internationale: WO 2015/124743

(56) Documents cités:
- WO-A1-2011/045466
- US-A1- 2010 178 564
- US-A1- 2011 183 206
- US-A1- 2011 262 807
- SUSANNE DÖRFLER ET AL: "High capacity vertical aligned carbon nanotube/sulfur composite cathodes for lithium-sulfur batteries", CHEMICAL COMMUNICATIONS, vol. 48, no. 34, 2012, page 4097, XP055157150, ISSN: 1359-7345, DOI: 10.1039/c2cc17925c

## Description

### DOMAINE TECHNIQUE

La présente invention a trait à un accumulateur électrochimique lithium-soufre comprenant une électrode positive présentant une géométrie particulière qui permet, lors du fonctionnement de l'accumulateur, d'optimiser le contact entre l'électrode positive, l'électrolyte et la matière active, de sorte à obtenir de bons résultats en termes de capacité de décharge.

Le domaine général de l'invention peut ainsi être défini comme celui des dispositifs de stockage d'énergie, en particulier celui des accumulateurs électrochimiques au lithium et, encore plus particulièrement, au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique le plus faible, permettant ainsi l'accès à une densité d'énergie massique intéressante, les accumulateurs au lithium ont détrôné largement les autres accumulateurs mentionnés ci-dessus du fait de l'amélioration continue des performances des accumulateurs Li-ion en terme de densité d'énergie. En effet, les accumulateurs lithium-ion permettent d'obtenir des densités d'énergie massique et volumique (pouvant être supérieures à 180 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en œuvre comme matériaux d'électrode le couple LiCoO₂/graphite contre une tension nominale de l'ordre de 1,5 V pour les autres accumulateurs susmentionnés).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g au lieu de 140 mAh/g pour LiCoO₂). Qui plus est, le soufre est présent, de manière abondante, sur la planète et se caractérise, de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹.

D'un point de vue structurel, une batterie d'accumulateur lithium/soufre comprend au moins une cellule électrochimique comportant deux électrodes à base de matériaux différents (une électrode positive comprenant, comme matériau actif, du soufre élémentaire et une électrode négative comprenant, comme matériau actif, du lithium métallique), entre lesquelles est disposé un électrolyte.

Plus spécifiquement, l'électrode positive est, classiquement, composée d'un matériau composite comprenant du soufre élémentaire et des additifs non électroactifs, tels qu'un additif conducteur électronique utilisé pour améliorer la conductivité électronique de l'électrode et un liant, par exemple, un liant polymère pour assurer la cohésion entre les différents composants du matériau composite.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (S₈ + 16e⁻ → 8S²⁻) et de la réaction d'oxydation du lithium l'électrode négative (Li → Li⁺₊e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque la batterie est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte, et la production de polysulfures de lithium à chaînes longues en solution. Puis, au fur et à mesure que la réduction du soufre se poursuit, la longueur de chaîne des polysulfures est graduellement réduite, et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation de la matière active soufrée.

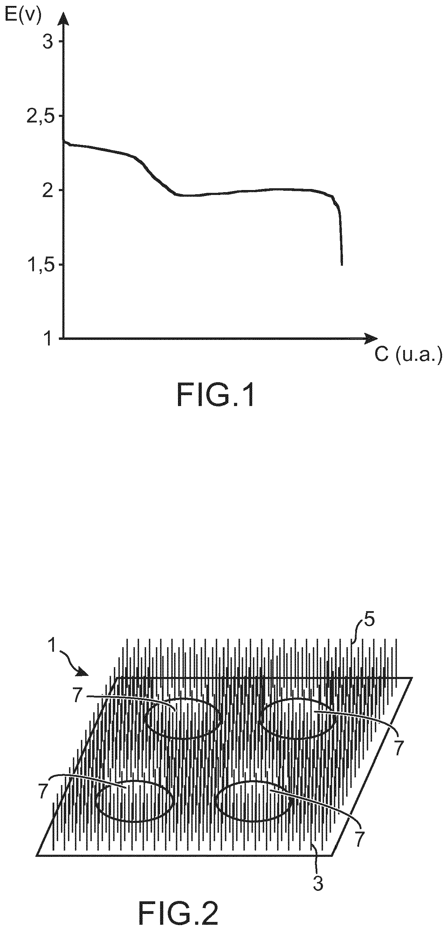

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive. En effet, le composé de fin de décharge Li₂S, tout comme le soufre élémentaire, sont des matériaux isolants qui, lorqu'ils précipitent en fin de charge ou de décharge, augmentent drastiquement la résistance de l'accumulateur et donc sa polarisation.

Ce fonctionnement atypique induit de nombreuses difficultés, ce qui peut entraver la commercialisation à grande échelle des accumulateurs lithium/soufre. En particulier, le caractère isolant du matériau actif impose de lui associer un conducteur électronique présentant une surface développée suffisante pour accommoder toute la matière active et retarder la passivation de l'électrode. Il a en effet pu être démontré que la capacité de décharge est fortement liée à la surface spécifique d'électrode positive accessible aux espèces soufrées solubles et insolubles. Pour ce faire, il a pu être proposé des électrodes positives présentant une surface spécifique importante, comme décrit dans FR 2979755, qui propose notamment des électrodes positives comportant un substrat conducteur électronique poreux, en particulier, ce substrat pouvant se présenter sous forme d'une mousse métallique ou carbonée, la structure poreuse permettant d'accueillir des espèces soufrées en quantité importante en fin de charge et de décharge, ce qui permet d'améliorer la capacité de décharge. En outre, dans FR 2979755, la matière active de l'électrode positive est introduite dans l'électrolyte sous forme de polysulfures de lithium (ce qui constitue ainsi un catholyte), ce qui ne nécessite pas la préparation d'une électrode positive composite, comme classiquement utilisé dans les accumulateurs au lithium, c'est-à-dire avec un substrat collecteur de courant sur lequel est déposée généralement une encre comprenant la matière active, un liant, par exemple, polymérique et un additif conducteur électronique. La non utilisation d'une électrode positive composite permet d'éviter une diminution de la capacité au cours des cycles. En effet, dans le cadre des batteries lithium-soufre, les cycles de dissolution et précipitation successifs de la matière active à l'électrode positive lui imposent d'importantes contraintes mécaniques. De ce fait, la morphologie des électrodes composites est donc susceptible de changer substantiellement à chaque cycle, ce qui engendre une perte de surface spécifique et, de façon concomitante, une perte de capacité de décharge pratique.

US 2011/183206 décrit des électrodes se présentant sous forme d'un substrat revêtu de nanotubes de carbone sous forme de fagots comme illustré sur la figure 1 de ce document (le substrat étant indiqué par la référence 102 et les nanotubes par la référence 108) mais sans référence à des accumulateurs électrochimiques du type lithium-soufre et aux problématiques associées.

US 2010/178564 décrit des dispositifs de stockage d'énergie comprenant une paire d'électrodes (respectivement, une cathode et une anode) et une solution électrolytique, au moins une des électrodes étant configurée de sorte à ce qu'une couche de nanotubes de carbone soit formée uniquement sur une partie de la surface d'un conducteur électrique.

Il est mentionné, en particulier, le fait que la distance entre les nanotubes de carbone est ajustée, de sorte à ce que l'électrolyte puisse circuler (paragraphe [0069]).

Des dispositifs de ce type sont notamment illustrés :
- sur la figure 5 de ce document, où les nanotubes de carbone forment des bandes parallèles à la surface d'un conducteur électrique ;
- sur les figures 6(a) et 6(b) de ce document, où les nanotubes de carbone forment, respectivement, des fagots rectangulaires et des fagots circulaires disposés à la surface d'un conducteur électrique.

Au vu de ce qui existe, les auteurs de la présente invention se sont proposé de mettre au point un nouveau type d'accumulateur électrochimique du type lithium-soufre comprenant une électrode positive qui présente une surface spécifique importante et, de plus, qui offre une bonne accessibilité de sa surface à la matière active et à l'électrolyte.

### EXPOSÉ DE L'INVENTION

Ainsi, l'invention a trait à un accumulateur électrochimique du type lithium-soufre comprenant au moins une cellule électrochimique qui comprend :
- une électrode positive ;
- une électrode négative ; et
- un électrolyte conducteur d'ions lithium disposé entre ladite électrode positive et ladite électrode négative,
caractérisé en ce que l'électrode positive comprend un substrat conducteur électrique revêtu, sur au moins une de ses faces, de manière sélective par des nanotubes de carbone de manière à créer une zone revêtue de nanotubes de carbone, qui est un tapis de nanotubes de carbone, au sein duquel sont ménagées plusieurs zones distinctes dépourvues de nanotubes de carbone, ces zones distinctes étant qualifiées de lacunes.

Autrement dit, l'électrode positive peut comporter un substrat conducteur électrique comportant, sur au moins une de ses faces, une zone revêtue de nanotubes de carbone, au sein de laquelle sont ménagées plusieurs zones distinctes dénuées de nanotubes de carbone (ces zones distinctes étant qualifiées de lacunes).

Les nanotubes de carbone sont, de préférence, perpendiculaires à la surface du substrat

Par exemple, le substrat conducteur électrique peut être revêtu sur au moins deux de ses faces, par exemple, sur deux faces opposées, de la manière explicitée ci-dessus, à savoir de manière sélective par des nanotubes de carbone de manière à créer, sur chacune desdites faces, une zone revêtue desdits nanotubes de carbone, ledit substrat comportant, en outre, sur lesdites faces susmentionnées, plusieurs zones distinctes dépourvues de nanotubes de carbone, dites lacunes, ménagées au sein de la zone revêtue de nanotubes de carbone.

Grâce à cette structuration spécifique, les électrodes positives de l'invention présentent les avantages suivants :
- une importante surface spécifique du fait de l'utilisation des nanotubes de carbone ;
- une accessibilité importante de la surface de l'électrode pour la matière active grâce à la présence des zones dépourvues de nanotubes de carbone, qui font office de zone(s) de circulation (ou plus précisément, de chemins de percolation) de la matière active jusqu'au pied des nanotubes, ce qui permet d'augmenter la quantité de matière active utilisable dans l'électrode positive et d'améliorer ainsi la capacité de décharge de l'accumulateur dans lequel sera incorporée l'électrode positive.

Qui plus est, l'électrode positive ne contient ni liant, ni conducteur électronique additionnel, ce qui permet d'éviter les inconvénients des électrodes composites de l'art antérieur, à savoir notamment les problèmes d'affaissement de structure, de délitement de l'électrode et, par voie de conséquence, les problèmes de perte de surface spécifique susceptible d'accueillir le dépôt de matière active.

L'électrode positive peut adopter différentes géométries, dès lors qu'elle souscrit à la définition donnée ci-dessus.

De manière plus spécifique, l'électrode positive peut comporter un substrat conducteur électrique revêtu, sur au moins une de ses faces, par un tapis de nanotubes de carbone (ce qui constitue la zone revêtue de nanotubes de carbone) comportant plusieurs lacunes, par exemple, circulaires (ces lacunes constituant les zones distinctes susmentionnées).

Une telle configuration est représentée sur la figure 2 jointe en annexe représentant une électrode positive 1 comportant un substrat conducteur électrique 3 revêtu d'un tapis de nanotubes de carbone 5 comportant quatre lacunes circulaires 7 dépourvues de nanotubes de carbone.

Ces lacunes, que ce soit pour la définition générale de la première configuration ou pour la définition plus spécifique figurant ci-dessus, peuvent présenter une plus grande distance supérieure à 10 nm, cette plus grande distance correspondant à l'écartement maximal entre deux points délimitant le contour de la lacune pris dans le plan du substrat. Lorsque les lacunes sont circulaires, cette plus grande distance correspond aux diamètres de ces lacunes.

Comme mentionné ci-dessus, cette plus grande distance est supérieure à 10 nm, par exemple, allant de 10 nm à 100 µm ou encore de 50 nm à 100 µm ou encore de 10 µm à 100 µm, et plus spécifiquement encore, de 1 µm à 20 µm.

Les lacunes peuvent être agencées de manière périodique à la surface du substrat.

De préférence, la distance minimale entre deux lacunes adjacentes (c'est-à-dire l'écartement minimal entre deux points délimitant le contour de chacune des lacunes) peut aller de 20 nm à 200 µm, plus spécifiquement de 100 nm à 200 µm, plus spécifiquement encore de 20 µm à 200 µm et encore plus spécifiquement et de manière préférée, de 50 µm à 100 µm.

Le substrat revêtu de nanotubes de carbone conformément à l'invention peut présenter un taux d'ouverture allant de 0,001% à 50%, de préférence inférieur à 25%, de préférence encore, inférieur à 10% et de manière encore plus préférée, inférieur à 1%.

On précise que, par taux d'ouverture, on entend le rapport (surface occupée par les lacunes sur la face du substrat collecteur de courant comportant une zone revêtue de nanotubes de carbone, au sein de laquelle sont ménagées lesdites lacunes)/(surface totale de ladite zone revêtue de nanotubes de carbone).

A titre d'exemple, l'électrode positive peut consister en un substrat conducteur électrique, se présentant sous forme d'un feuillard en aluminium, lequel substrat est revêtu d'un tapis de nanotubes de carbone présentant des lacunes circulaires de 30 µm de diamètre agencées de sorte à ce que la distance entre le centre de deux lacunes adjacentes soit de 40 µm.

Quelle que soit la configuration de l'électrode positive, les nantotubes de carbone peuvent présenter une hauteur allant de 1 µm à 1 mm.

Le substrat conducteur électrique peut quant à lui comprendre un matériau métallique ou carboné, par exemple sous forme d'une plaque ou d'un feuillard, tel que de l'aluminium, le nickel, l'acier inox.

Selon une autre alternative, le substrat conducteur électrique peut être une grille, par exemple, une grille métallique, dont les espaces sont les lacunes et les lignes délimitant ces lacunes sont les zones revêtues de nanotubes de carbone. La distance entre deux lignes adjacentes susmentionnées peut être comprise entre 50 nm et 200 µm, de préférence, encore entre 10 µm et 200 µm. La largeur d'une telle ligne peut être comprise entre 50 nm et 200 µm, de préférence, entre 10 µm et 200 µm. De cette façon, la présence anticipée de lacunes dans le substrat peut simplifier le dépôt localisé du catalyseur nécessaire à la croissance des nanotubes de carbone, par exemple, par dépôt chimique en phase vapeur.

Indépendamment de la configuration de l'électrode positive, l'essentiel est que celle-ci présente, à la surface de l'une des faces du substrat, des zones dépourvues de nanotubes de carbone, qui vont pouvoir constituer des chemins de circulation (et également des chemins de percolation) pour amener aux points d'ancrage des nanotubes des espèces actives, lorsque celles-ci sont amenées en solution liquide au contact de l'électrode positive, ce qui permet d'augmenter la quantité d'espèces en contact avec l'électrode positive, du fait que la totalité de la surface apportée par les nanotubes de carbone est rendue accessible à ces espèces grâce à la structuration spécifique des électrodes de l'invention.

Outre les éléments susmentionnés, l'électrode positive peut comporter, avant son incorporation dans un accumulateur, un matériau actif soufré déposé sur la face revêtue de nanotubes de carbone, ce matériau actif pouvant être du soufre élémentaire, du disulfure de lithium Li₂S ou des polysulfures de lithium Li₂Sₙ avec n étant un entier allant de 2 à 8.

Le matériau actif soufré peut être amené au contact de l'électrode positive après son incorporation dans un accumulateur via l'électrolyte comprenant des polysulfures de lithium (lequel électrolyte pouvant alors être qualifié de catholyte).

Comme mentionné ci-dessus, les électrodes positives de l'invention sont destinées à entrer dans la constitution d'accumulateurs électrochimiques du type lithium-soufre.

Par ailleurs, nous précisons les définitions suivantes.

Par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

L'électrode négative peut comprendre, de préférence, un substrat collecteur de courant sur lequel est placé au moins le matériau actif de l'électrode négative, ce matériau actif pouvant être avantageusement du lithium métallique.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être une plaque en inox ou en cuivre.

L'électrolyte est un électrolyte conducteur d'ions lithium, cet électrolyte pouvant être, en particulier, un électrolyte liquide comprenant au moins un solvant organique et au moins un sel de lithium.

Le ou les solvants organiques peuvent être un solvant polaire aprotique choisi, en particulier, parmi les solvants carbonates et notamment les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate le carbonate de diméthyle ou le carbonate de diéthyle (symbolisé par l'abréviation DEC), le carbonate de diméthyle (symbolisé par l'abréviation DMC), le carbonate d'éthylméthyle (symbolisé par l'abréviation EMC).

Le ou les solvants organiques peuvent être choisis également parmi les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O- [CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiClO₄, LiBF₄, LiAsF₆, LiI, LiNO₃ LiCF₃SO₃, LiN (CF₃SO₂)₂ (appelé également bis[(trifluorométhyl)sulfonyl]imide de lithium correspondant à l'abréviation LiTFSI), LiN (C₂F₅SO₂)₂ (appelé également bis[(perfluoroéthyl)sulfonyl]imide de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,3 M à 2 M, par exemple, 1M.

En outre, l'électrolyte peut comprendre au moins un composé polysulfure de lithium de formule Li₂Sₙ avec n étant un entier allant de 2 à 8.

Ce composé constitue ainsi la source de soufre pour le matériau actif de l'électrode positive.

Dans ce cas, la quantité de composé polysulfure de lithium introduite dans l'électrolyte est adaptée en fonction de la surface spécifique de l'électrode positive, celle-ci dictant la quantité de matériau actif qu'il est possible de déposer sur l'électrode positive.

Le composé polysulfure de lithium peut être fabriqué préalablement à l'introduction dans l'électrolyte par mélange de lithium métal et de soufre élémentaire dans les bonnes proportions et dans un solvant compatible avec celui ou ceux compris dans l'électrolyte.

L'électrolyte, lorsqu'il comprend au moins un composé polysulfure de lithium tel que défini ci-dessus peut être qualifié de « catholyte ».

Dans la batterie au lithium, l'électrolyte liquide susmentionné peut être amené, dans les cellules électrochimiques des batteries au lithium, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide ou peut être un polymère gélifié.

L'accumulateur électrochimique au lithium peut adopter différentes configurations, telles qu'une configuration de pile bouton ou une configuration de pile où la ou les cellules électrochimiques se présentent sous forme d'un sachet souple ou encore une configuration où l'accumulateur présente un empilement de cellules électrochimiques. Il s'entend que les dimensions de l'électrode positive conforme à l'invention seront ajustées, afin qu'elles soient compatibles avec la configuration de l'accumulateur.

Les accumulateurs conformes à l'invention sont particulièrement adaptés à des produits nécessitant des architectures d'intégration compactes (tels que dans les systèmes embarqués, les systèmes autonomes), où une énergie importante est requise. Ce type d'exigences peut se rencontrer dans les domaines des produits nécessitant une alimentation autonome, ce qui est le cas des domaines de l'informatique, de la vidéo, de la téléphonie, des transports tels que les véhicules électriques, les véhicules hybrides, ou encore des domaines médicaux, spatiaux, de la microélectronique.

Les électrodes positives entrant dans la constitution des accumulateurs de l'invention peuvent être préparées par un procédé comprenant une étape de croissance de nanotubes de carbone, de manière sélective, sur au moins une des faces d'un substrat conducteur électrique via une zone revêtue d'une couche d'au moins un catalyseur de croissance de nanotubes de carbone.

Il s'entend que la zone revêtue d'une couche d'au moins un catalyseur de croissance de nanotubes de carbone correspondra, après croissance desdits nanotubes de carbone, à la zone revêtue desdits nanotubes de carbone dans l'électrode positive.

Le catalyseur de croissance de nanotubes de carbone peut être, par exemple, du fer, du cobalt, du nickel.

L'étape de croissance peut être réalisée par dépôt chimique en phase vapeur en faisant circuler sur le substrat défini ci-dessus au moins un précurseur gazeux carboné (tel que de l'acétylène C₂H₂, de l'éthylène C₂H₄) en milieu réducteur (par exemple, en présence d'hydrogène).

Préalablement à l'étape de croissance de nanotubes de carbone, le procédé de l'invention peut comprendre une étape de préparation du substrat conducteur électrique comportant, sur au moins une de ses faces, de manière sélective, une zone revêtue d'une couche d'au moins un catalyseur de croissance de nanotubes de carbone.

Cette étape de préparation peut être réalisée en recouvrant entièrement au moins une face d'un substrat conducteur électrique par une couche d'au moins un catalyseur de croissance de nanotubes de carbone suivi d'une ablation (par exemple, une ablation laser) d'une partie de cette couche, de sorte à ne laisser subsister sélectivement qu'une zone revêtue d'une couche d'au moins un catalyseur de croissance de nanotubes de carbone, tandis que les zones ablatées correspondent aux zones non revêtues d'une couche de catalyseur (lesquelles zones correspondront ainsi aux zones non revêtues de nanotubes de carbone de l'électrode positive, qui sont des lacunes). La technique de l'ablation laser peut permettre d'obtenir des zones non revêtues d'une couche de catalyseur présentant une plus grande dimension (plus précisément, un diamètre, lorsque les zones sont circulaires) allant de 10 µm à 100 µm.

Cette étape de préparation peut être réalisée en ne recouvrant sélectivement d'une couche de catalyseur que la zone destinée à être revêtue de nanotubes de carbone, ceci pouvant être obtenu soit en protégeant le substrat avec un masque mécanique lors du dépôt du catalyseur soit en utilisant des techniques de lithographie, telles que la photolithographie, en utilisant, une résine photosensible (telle qu'un copolymère bloc). La technique de lithographie peut permettre d'obtenir des zones non revêtues d'une couche de catalyseur présentant une plus grande dimension (plus précisément, un diamètre, lorsque les zones sont circulaires) allant de 10 nm à 10 µm.

L'étape de préparation peut être réalisée aussi en déposant sur au moins une face du substrat conducteur électrique des billes ou des objets (par exemple de tailles correspondant à la taille des lacunes que l'on souhaite obtenir) suivi d'un dépôt de catalyseur (par des techniques similaires à celles définies ci-dessus, le catalyseur pouvant être, par exemple, une couche de fer de 1 nm d'épaisseur déposée par PVD) puis suivi de la suppression des billes ou objets déposées, les places laissées vacantes par cette suppression constituant, ainsi, des zones dépourvues de catalyseur. Les billes peuvent être des billes en abrasif (par exemple, alumine, diamant) ou encore des billes calibrées en verre. Les billes ou objets susmentionnés peuvent être déposés par pulvérisation d'une solution à base d'eau et/ou alcool les comprenant, la concentration en billes ou objets étant ajustée dans cette solution. Une fois le dépôt de catalyseur effectué, les billes ou objets peuvent être supprimés par soufflage, par immersion dans un solvant avec ou sans ultrasons, par balayage laser ou par CO₂ supercritique.

Après l'étape de croissance des nanotubes de carbone, le procédé peut comprendre une étape de dépôt, à la surface de l'électrode positive, d'un matériau soufré, qui peut être du soufre élémentaire (l'étape de dépôt pouvant consister en une imprégnation de l'électrode positive par du soufre élémentaire à l'état liquide (ou état fondu) ou à l'état gazeux (ou état sublimé) ou du disulfure de lithium Li₂S (l'étape de dépôt pouvant consister en une étape d'imprégnation de l'électrode positive par du disulfure de lithium).

Alternativement, la matière active peut être incorporée dans l'électrolyte sous forme de polysulfure de lithium.

L'accumulateur électrochimique du type lithium-soufre conforme à l'invention peut être préparé par un procédé comprenant, pour chaque cellule électrochimique, une étape de mise en place d'une électrode positive et d'une électrode négative de part et d'autre d'un électrolyte imprégnant, éventuellement un séparateur.

L'invention va, à présent, être décrite en référence aux modes de réalisation particuliers définis ci-dessous en référence aux figures annexées.

### BRÈVE DESCRIPTION DES DESSINS

La figure 1 est un graphique illustrant l'évolution du potentiel E (en V) en fonction de la capacité C (en u.a).
La figure 2 est une vue en perspective de dessus d'une électrode positive conforme à l'invention présentant une configuration particulière.

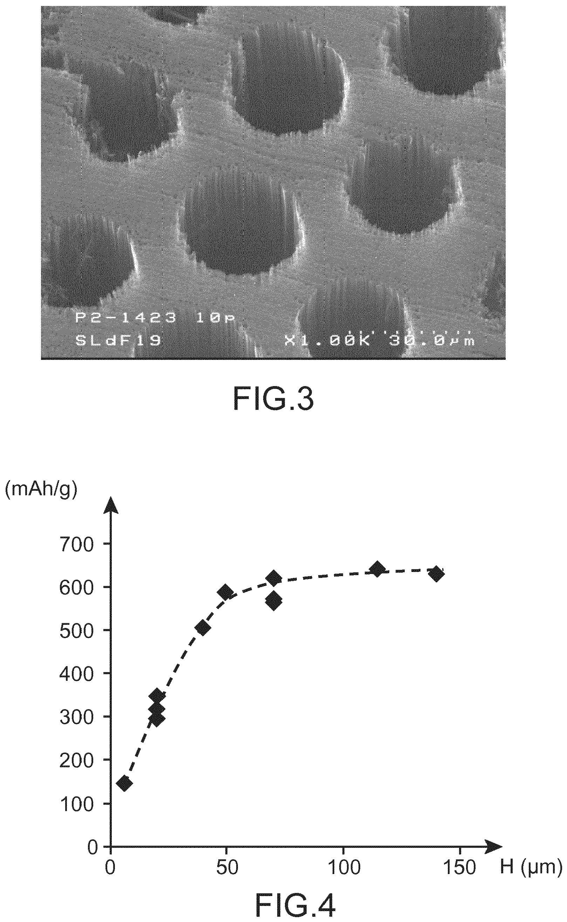

La figure 3 est une photographie prise de dessus de l'électrode positive obtenue à l'exemple 1.
La figure 4 est un graphique illustrant l'évolution de la capacité spécifique de l'accumulateur C (en mAh/g) en fonction de la hauteur des nanotubes de carbone H (en µm).

### EXPOSÉ DÉTAILLÉ DE MODES DE RÉALISATION PARTICULIERS

### EXEMPLE 1

Le présent exemple illustre la préparation d'une électrode positive conforme à l'invention et d'un accumulateur comprenant une telle électrode. Pour ce faire, deux étapes sont mises en place :
- une étape de préparation de l'électrode positive (étape a) ci-dessous) ;
- une étape de préparation de l'accumulateur (étape b) ci-dessous).

### a)Préparation de l'électrode positive

Un feuillard en aluminium d'environ 20 µm d'épaisseur et 14 mm de diamètre est tout d'abord nettoyé soigneusement par un procédé de nettoyage par plasma O₂.

Le feuillard ainsi nettoyé est ensuite recouvert d'une couche de fer (d'une épaisseur de 0,5 nm) par dépôt physique en phase vapeur (PVD), cette couche de fer étant destinée à constituer le catalyseur pour la croissance de nanotubes de carbone.

Cette couche de fer est partiellement retirée par ablation laser sur des zones circulaires de 30 µm de diamètre, dont les centres sont espacés de 40 µm.

Le feuillard est ensuite introduit dans une chambre de dépôt chimique en phase vapeur (CVD) pour la croissance des nanotubes de carbone. Il s'entend que seule la zone recouverte d'une couche de fer sera le siège de la croissance des nanotubes de carbone (ce qui signifie, en d'autres termes, que les zones circulaires seront libres de nanotubes de carbone).

La croissance CVD est réalisée après nettoyage *via* un plasma air (O₂ :N₂ 20 : 80) dans les conditions suivantes :
*Augmentation de la température du réacteur jusqu'à 600°C en 15 minutes sous une atmosphère composée de C₂H₂ (5 sccm), de H₂ (90 sccm) et de He (110 sccm) pour une pression totale de 0,9 Torr ;
*Maintien de l'atmosphère susmentionnée à 600°C pendant 1 heure ; et
*Refroidissement sous hélium.

Il en résulte un tapis de nanotubes de carbone présentant une hauteur de 50 à 60 µm présentant des lacunes circulaires (de dimensions correspondant aux dimensions des zones circulaires susmentionnées) réparties périodiquement à la surface du feuillard (comme illustré sur la figure 3 jointe en annexe), constituant ainsi l'électrode positive.

En variante de la croissance CVD assistée par plasma, la croissance CVD peut être réalisée au moyen de filaments de tungstène portés à haute température dans le réacteur.

Les conditions de mise en œuvre sont alors les suivantes :
- la température de consigne du réacteur est abaissée à 450°C ;
- la composition des gaz est légèrement modifiée : C₂H₂ :H₂ :He (20 :50 :110) ;
- la puissance des filaments est fixée à 500 W ;
- un temps de croissance de 30 minutes est suffisant.

Il en résulte un tapis de nanotubes de carbone plus dense et présentant une hauteur de 140 µm.

### b) Préparation de l'accumulateur

La matière active soufrée de l'électrode positive est amenée sous forme d'un catholyte, qui comprend les ingrédients suivants :
- du solvant 1,3-dioxolane (fourni par Aldrich) à raison de 50 µL ;
- du solvant tétraéthylèneglycol diméthyléther (fourni par Aldrich) à raison de 50 µL ;
- du polysulfure de lithium Li₂S₆ à 0,25 M ;
- du sel bis(trifluorométhanesulfonyl)imide de lithium (LiTFSI) 1M ; et
- du sel nitrate de lithium LiNO₃ 0,1 M.

L'accumulateur est monté sous forme d'une pile bouton (CR 2032), qui comporte respectivement :
- une électrode positive circulaire de 14 mm diamètre obtenue par découpe du feuillard obtenu à l'étape a) explicitée ci-dessus ;
- une électrode négative en lithium métallique, qui consiste en un disque de 130 µm d'épaisseur et de 16 mm de diamètre, lequel disque est déposé sur un disque en inox servant de collecteur de courant ; et
- un séparateur disposé entre l'électrode positive et l'électrode négative imbibé du catholyte défini ci-dessus.

### EXEMPLE 2

Cet exemple est similaire à l'exemple 1, si ce n'est que l'accumulateur est préparé selon des modalités différentes, qui sont exposées ci-dessous.

Pour ce faire, une électrode positive est préparée par découpe d'un disque de 14 mm de diamètre dans un feuillard recouvert partiellement de nanotubes de carbone préparé selon les modalités de l'étape a) de l'exemple 1 (celui obtenu par CVD par plasma).

L'électrode ainsi obtenue est plaquée sur une plaque chauffante. La quantité de soufre, que l'on souhaite introduire dans l'accumulateur (de 1 à 3 mg) est déposée sous forme d'une poudre sur l'électrode. La température de la plaque chauffante est augmentée progressivement, afin de faire fondre le soufre solide (la température de fusion étant de l'ordre de 115°C). Ainsi fondu, le soufre pénètre dans la porosité du tapis de nanotubes de carbone par capillarité.

L'électrode positive ainsi soufrée est montée en pile bouton selon les mêmes modalités que celles exposées à l'exemple 1, en utilisant un électrolyte comprenant les ingrédients suivants :
- du solvant 1,3-dioxolane (fourni par Aldrich) à raison de 50 µL ;
- du solvant tétraéthylèneglycol diméthyléther (fourni par Aldrich) à raison de 50 µL ;
- du sel bis(trifluorométhanesulfonyl)imide de lithium (LiTFSI) 1M ; et
- du sel nitrate de lithium LiNO₃ 0,1 M.

### EXEMPLE 3

Le présent exemple illustre la préparation d'une électrode positive conforme à l'invention et d'un accumulateur comprenant un tel ensemble. Pour ce faire, deux étapes sont mises en place :
- une étape de préparation de l'ensemble susmentionné (étape a) ci-dessous) ;
- une étape de préparation de l'accumulateur (étape b) ci-dessous).

### a)Préparation de l'électrode positive

Un feuillard d'aluminium conforme à celui utilisé dans l'exemple 1 est nettoyé selon les mêmes modalités que celles définies dans cet exemple.

Ensuite, un résine photosensible positive est étalée sur le feuillard en aluminium ainsi nettoyé puis insolée en utilisant un masque aux motifs adéquats, tels que l'insolation soit effective sur toute la surface de la résine, à l'exception de zones circulaires de 20 à 30 µm de diamètre espacées de 40 µm. Après développement, une fine couche de fer (de 0,5 nm de diamètre) est déposée par PVD sur toute la surface du feuillard. Un « lift-off » est réalisé, afin de retire le reste de la résine ainsi que le fer déposé sur cette résine.

La croissance des nanotubes de carbone est réalisée de la même manière que dans l'exemple 1, avec ou sans filaments chauds suivant la hauteur de tapis visée.

### b) Préparation de l'accumulateur

L'accumulateur de cet exemple est préparé selon les mêmes modalités que celles de l'exemple 1.

### EXEMPLE 4

Le présent exemple illustre la préparation d'une électrode positive conforme à l'invention et d'un accumulateur comprenant un tel ensemble. Pour ce faire, deux étapes sont mises en place :
- une étape de préparation de l'électrode positive susmentionnée (étape a) ci-dessous) ;
- une étape de préparation de l'accumulateur (étape b) ci-dessous).

### a)Préparation de l'électrode positive

Un feuillard d'aluminium conforme à celui utilisé dans l'exemple 1 est nettoyé selon les mêmes modalités que celles définies dans cet exemple.

Une technique de lithographie utilisant un copolymère comme résine photosensible est mise en œuvre pour réaliser une structuration nanométrique du tapis de nanotubes de carbone.

Pour ce faire, un copolymère dibloc photosensible, le polystyrène-b-poly(méthacrylate de méthyle) (PS-b-PMMA, 104 kg.mol⁻¹) est déposé sur le feuillard par enduction centrifuge pour former une couche d'une épaisseur d'environ 60 nm. La couche est recuite à 190°C pendant 7 jours, ce qui permet d'obtenir une séparation de phases entre les blocs PS et PMMA du copolymère, cette séparation de phases se concrétisant par la formation de domaines de PS et de PMMA consistant en des lamelles d'environ 50 nm de large orientées perpendiculairement au feuillard.

Ensuite, l'ensemble est insolé sur toute sa surface. Le PMMA est photosensible et pourra alors être retiré en plongeant l'échantillon dans un bain d'acide acétique. Le nettoyage peut être complété par un traitement RIE court (RIE correspondant à la terminologie anglo-saxonne « reactive ion etching »), de sorte à ce que seuls les domaines PS restent sur l'échantillon. Une fiche couche de fer (d'épaisseur 0,5 nm) est déposée par PVD sur toute la surface du substrat. Un « lift-off » est réalisé afin de retirer la partie PS de la résine ainsi que le fer déposé sur cette résine.

Cette technique permet de créer un réseau de nanotubes de carbone discontinu, présentant des pores de la forme et la taille des domaines de PS présents lors du dépôt du catalyseur. A ces microporosités peuvent être associées des mésoporosités par ablation laser partielle du catalyseur comme explicité à l'exemple 1.

La croissance des nanotubes de carbone est réalisée de la même manière que dans l'exemple 1, avec ou sans filaments chauds suivant la hauteur de tapis visée.

### b) Préparation de l'accumulateur

L'accumulateur de cet exemple est préparé selon les mêmes modalités que celles de l'exemple 1.

### EXEMPLE COMPARATIF 1

Le présent exemple illustre la préparation d'une électrode positive non conforme à l'invention et d'un accumulateur comprenant une telle électrode. Pour ce faire, deux étapes sont mises en place :
- une étape de préparation de l'électrode positive (étape a) ci-dessous) ;
- une étape de préparation de l'accumulateur (étape b) ci-dessous).

### a)Préparation de l'électrode positive

Dans un premier temps, une encre est réalisée à partir des ingrédients suivants :
- du soufre élémentaire (fourni par Aldrich) (80% en masse) ;
- du noir de carbone (Super P®, fourni par Timcal) (10% en masse) ;
- un liant (difluorure de polyvinylidène fourni par Solvay) (10% en masse) mis en solution dans la N-méthylpyrrolidone.

L'encre est déposée par enduction à l'aide d'une racle micrométrique sur un feuillard en aluminium d'environ 20 µm d'épaisseur, de 50 cm de longueur et de 20 cm de largeur.

La couche ainsi obtenue est séchée à 55°C pendant 24 heures sous air.

### b) Préparation de l'accumulateur

L'accumulateur est monté sous forme d'une pile bouton (CR 2032), qui comporte respectivement :
- une électrode positive circulaire de 14 mm diamètre obtenue par découpe du feuillard obtenu à l'étape a) explicitée ci-dessus ;
- une électrode négative en lithium métallique, qui consiste en un disque de 130 µm d'épaisseur et de 16 mm de diamètre, lequel disque est déposé sur un disque en inox servant de collecteur de courant ; et
- un séparateur disposé entre l'électrode positive et l'électrode négative imbibé d'un électrolyte comprenant du LiTFSI (1 mol.L⁻¹) + LiNO₃ (0,1M) dans un mélange 50/50 en volume de tétraéthylèneglycol de diméthyléther et de dioxolane.

### EXEMPLE COMPARATIF 2

Le présent exemple illustre la préparation d'une électrode positive non conforme à l'invention et d'un accumulateur comprenant un tel ensemble. Pour ce faire, deux étapes sont mises en place :
- une étape de préparation de l'électrode positive (étape a) ci-dessous) ; et
- une étape de préparation de l'accumulateur (étape b) ci-dessous).

### a)Préparation de l'électrode positive

Un feuillard en aluminium d'environ 20 µm d'épaisseur et de 14 mm de diamètre est tout d'abord nettoyé soigneusement par un procédé de nettoyage par plasma O₂.

Le feuillard ainsi nettoyé est ensuite recouvert d'une couche de fer (d'une épaisseur de 0,5 nm) par dépôt physique en phase vapeur (PVD), cette couche de fer étant destinée à constituer le catalyseur pour la croissance de nanotubes de carbone.

Le feuillard est ensuite introduit dans une chambre de dépôt chimique en phase vapeur (CVD) pour la croissance des nanotubes de carbone.

La croissance CVD est réalisée au moyen d'un plasma air (O₂ :N₂ 20 : 80) dans les conditions suivantes :
*Augmentation de la température du réacteur jusqu'à 600°C en 15 minutes sous une atmosphère composée de C₂H₅ (5 sccm), de H₂ (90 sccm) et de He (110 sccm) pour une pression totale de 0,9 Torr ;
*Maintien de l'atmosphère susmentionnée à 600°C pendant 1 heure ; et
*Refroidissement sous hélium.

Il en résulte un tapis de nanotubes de carbone présentant une hauteur de 50 à 60 µm et dénué de lacunes.

### b) Préparation de l'accumulateur

La matière active soufrée de l'électrode positive est amenée sous forme d'un catholyte, qui comprend les ingrédients suivants :
- du solvant 1,3-dioxolane (fourni par Aldrich) à raison de 50 µL ;
- du solvant tétraéthylèneglycol diméthyléther (fourni par Aldrich) à raison de 50 µL ;
- du polysulfure de lithium Li₂S₆ 0,25 M ;
- du sel bis(trifluorométhanesulfonyl)imide de lithium (LiTFSI) 1M;
- du sel nitrate de lithium LiNO₃ 0,1 M.

L'accumulateur est monté sous forme d'une pile bouton (CR 2032), qui comporte respectivement :
- une électrode positive circulaire de 14 mm diamètre obtenue par découpe du feuillard obtenu à l'étape a) explicitée ci-dessus ;
- une électrode négative en lithium métallique consiste en un disque de 130 µm d'épaisseur et de 16 mm de diamètre, lequel disque est déposé sur un disque en inox servant de collecteur de courant ; et
- un séparateur disposé entre l'électrode positive et l'électrode négative imbibé du catholyte défini ci-dessus.

Cet exemple a été réitéré plusieurs fois en modifiant la hauteur des nanotubes de carbones et en mesurant la capacité spécifique de l'accumulateur.

La figure 4 est un graphique illustrant l'évolution de la capacité spécifique de l'accumulateur C (en mAh/g) en fonction de la hauteur des nanotubes de carbone H (en µm).

On peut constater que la capacité spécifique augmente avec la hauteur du tapis de nanotubes de carbone. Ainsi, une plus forte surface spécifique permet d'améliorer, dans une certaine mesure, l'utilisation de la matière active. En outre, la capacité spécifique des accumulateurs plafonne à partir d'une certaine hauteur de tapis. Or la capacité atteinte (de l'ordre de 600 mAh/g) est encore éloignée de la capacité théorique de 1675 mAh/g, ce qui met en évidence le problème de l'accessibilité de la surface offerte par les tapis de nanotubes de carbone, dû à l'absence de zones de circulation dénuées de nanotubes de carbone.

## Revendications

1. Accumulateur électrochimique du type lithium-soufre comprenant au moins une cellule électrochimique qui comprend :
- une électrode positive (1) ;
- une électrode négative ; et
- un électrolyte conducteur d'ions lithium disposé entre ladite électrode positive et ladite électrode négative,
**caractérisé en ce que** l'électrode positive (1) comprend un substrat conducteur électrique (3) revêtu, sur au moins une de ses faces, de manière sélective par des nanotubes de carbone de manière à créer une zone revêtue de nanotubes de carbone, qui est un tapis de nanotubes de carbone (5), au sein duquel sont ménagées plusieurs zones distinctes dépourvues de nanotubes de carbone, ces zones distinctes étant qualifiées de lacunes (7).

2. Accumulateur selon la revendication 1, dans lequel le substrat conducteur électrique (3) est revêtu sur au moins deux de ses faces, de manière sélective, par des nanotubes de carbone de manière à créer, sur chacune desdites faces, une zone revêtue desdits nanotubes de carbone, qui est un tapis de nanotubes de carbone (5), au sein duquel sont ménagées plusieurs zones distinctes dépourvues de nanotubes de carbone, ces zones distinctes étant qualifiées de lacunes (7).

3. Accumuateur électrochimique selon la revendication 1 ou 2, dans lequel les nanotubes de carbone sont perpendiculaires à la surface du substrat.

4. Accumulateur électrochimique selon l'une quelconque des revendications précédentes, dans laquelle les lacunes (7) sont des lacunes circulaires.

5. Accumulateur électrochimique selon l'une quelconque des revendications précédentes, dans lequel les lacunes (7) présentent une plus grande distance supérieure à 10 nm, cette plus grande distance correspondant à l'écartement maximal entre deux points délimitant le contour de la lacune pris dans le plan du substrat, cette plus grande distance correspondant aux diamètres de ces lacunes, lorsque ces lacunes sont circulaires.

6. Accumulateur électrochimique selon l'une quelconque des revendications précédentes, dans lequel la plus grande distance va de 10 nm à 100 µm ou encore de 50 nm à 100 µm ou, plus spécifiquement, encore de 1 µm à 20 µm.

7. Accumulateur électrochimique selon l'une quelconque des revendications précédentes, dans lequel la distance minimale entre deux lacunes adjacentes (c'est-à-dire l'écartement minimal entre deux points délimitant le contour de chacune des lacunes) va de 20 nm à 200 µm, plus spécifiquement de 100 nm à 200 µm, plus spécifiquement encore de 20 µm à 200 µm et encore plus spécifiquement de 50 µm à 100 µm.

8. Accumulateur électrochimique selon l'une quelconque des revendications précédentes, dans lequel le substrat conducteur électrique (3) comprend un matériau métallique, tel que de l'aluminium.

9. Accumulateur électrochimique selon l'une quelconque des revendications précédentes, dans lequel l'électrode positive (1) comporte un matériau actif soufré déposé sur la face revêtue de nanotubes de carbone, ce matériau actif pouvant être du soufre élémentaire, du disulfure de lithium Li₂S ou des polysulfures de lithium Li₂Sₙ avec n étant un entier allant de 2 à 8.

10. Accumulateur électrochimique selon l'une quelconque des revendications précédentes, dans lequel l'électrode négative comprend un substrat collecteur de courant, sur lequel est placé au moins le matériau actif de l'électrode négative, lequel matériau actif est du lithium métallique.

11. Accumulateur électrochimique selon l'une quelconque des revendications précédentes, dans lequel l'électrolyte conducteur d'ions lithium est un électrolyte liquide comprenant au moins un solvant organique et au moins un sel de lithium.

12. Accumulateur électrochimique selon la revendication 11, dans lequel le ou les solvants organiques sont choisis parmi les solvants éthers.

13. Accumulateur électrochimique selon la revendication 11 ou 12, dans lequel le sel de lithium est choisi dans le groupe constitué par LiPF₆, LiClO₄, LiBF₄, LiAsF₆, LiI, LiNO₃ LiCF₃SO₃, LiN (CF₃SO₂)₂ (appelé également bis[(trifluorométhyl)sulfonyl]imide de lithium correspondant à l'abréviation LiTFSI), LiN (C₂F₅SO₂)₂ (appelé également bis[(perfluoroéthyl)sulfonyl]imide de lithium correspondant à l'abréviation LiBETI), LiCH₃SO₃, LiB(C₂O₄)₂ (appelé également bis(oxalato)borate de lithium ou LiBOB) et les mélanges de ceux-ci.

14. Accumulateur électrochimique selon l'une quelconque des revendications précédentes, dans lequel l'électrolyte comprend, en outre, au moins un composé polysulfure de lithium de formule Li₂Sₙ avec n étant un entier allant de 2 à 8.

## Patentansprüche

1. Elektrochemischer Akkumulator vom Typ Lithium-Schwefel, umfassend wenigstens eine elektrochemischen Zelle, die Folgendes umfasst:
- eine positive Elektrode (1);
- eine negative Elektrode; und
- einen Elektrolyt, der Lithiumionen leitet, der zwischen der positiven Elektrode und der negativen Elektrode angeordnet ist,
**dadurch gekennzeichnet, dass** die positive Elektrode (1) ein elektrisch leitendes Substrat (3) umfasst, das auf wenigstens einer seiner Flächen in selektiver Weise mit Kohlenstoffnanoröhrchen derart beschichtet ist, dass eine mit Kohlenstoffnanoröhrchen beschichtete Zone gebildet wird, die ein Teppich aus Kohlenstoffnanoröhrchen (5) ist, innerhalb dessen mehrere getrennte Zonen ohne Kohlenstoffnanoröhrchen vorgesehen sind, wobei diese getrennten Zonen als Lücken (7) qualifiziert werden.

2. Akkumulator nach Anspruch 1, bei dem das elektrisch leitende Substrat (3) auf wenigstens zwei seiner Flächen in selektiver Weise mit Kohlenstoffnanoröhrchen derart beschichtet ist, dass auf jeder seiner Flächen eine mit den Kohlenstoffnanoröhrchen beschichtete Zone gebildet ist, die ein Teppich aus Kohlenstoffnanoröhrchen (5) ist, innerhalb dessen mehrere getrennte Zonen ohne Kohlenstoffnanoröhrchen vorgesehen sind, wobei diese getrennten Zonen als Lücken (7) qualifiziert werden.

3. Elektrochemischer Akkumulator nach Anspruch 1 oder 2, bei dem die Kohlenstoffnanoröhrchen orthogonal zur Oberfläche des Substrats sind.

4. Elektrochemischer Akkumulator nach einem der vorhergehenden Ansprüche, bei dem die Lücken (7) kreisförmige Lücken sind.

5. Elektrochemischer Akkumulator nach einem der vorhergehenden Ansprüche, bei dem die Lücken (7) einen größten Abstand von mehr als 10 nm aufweisen, wobei dieser größte Abstand dem maximalen Abstand zwischen zwei Punkten entspricht, die den Umfang der Lücke in der Ebene des Substrats begrenzen, wobei dieser größte Abstand den Durchmessern der Lücken entspricht, wenn diese Lücken kreisförmig sind.

6. Elektrochemischer Akkumulator nach einem der vorhergehenden Ansprüche, bei dem der größte Abstand von 10 nm bis 100 µm geht, oder auch von 50 nm bis 100 µm, oder spezifischer auch von 1 µm bis 20 µm.

7. Elektrochemischer Akkumulator nach einem der vorhergehenden Ansprüche, bei dem der minimale Abstand zwischen zwei benachbarten Lücken (das heißt der minimale Abstand zwischen zwei Punkten, die den Umfang von jeder der Lücken begrenzen) von 20 nm bis 200 µm geht, spezifischer von 100 nm bis 200 µm, noch spezifischer von 20 µm bis 200 µm, und noch spezifischer von 50 µm bis 100 µm.

8. Elektrochemischer Akkumulator nach einem der vorhergehenden Ansprüche, bei dem das elektrisch leitende Substrat (3) ein metallisches Material wie zum Beispiel Aluminium umfasst.

9. Elektrochemischer Akkumulator nach einem der vorhergehenden Ansprüche, bei dem die positive Elektrode (1) ein aktives Schwefelmaterial umfasst, das auf die mit Kohlenstoffnanoröhrchen beschichtete Fläche aufgebracht ist, wobei dieses aktive Material elementarer Schwefel, Lithiumdisulfid Li₂S oder Polysulfide von Lithium Li₂Sₙ sein kann, wobei n eine ganze Zahl ist, die von 2 bis 8 geht.

10. Elektrochemischer Akkumulator nach einem der vorhergehenden Ansprüche, bei dem die negative Elektrode ein Stromkollektorsubstrat umfasst, auf dem wenigstens das aktive Material der negativen Elektrode platziert ist, wobei das aktive Material metallisches Lithium ist.

11. Elektrochemischer Akkumulator nach einem der vorhergehenden Ansprüche, bei dem der Elektrolyt, der Lithiumionen leitet, ein flüssiger Elektrolyt ist, der wenigstens ein organisches Lösungsmittel und wenigstens ein Lithiumsalz umfasst.

12. Elektrochemischer Akkumulator nach Anspruch 11, bei dem das oder die organischen Lösungsmittel aus den Ether-Lösungsmitteln ausgewählt sind.

13. Elektrochemischer Akkumulator nach Anspruch 11 oder 12, bei dem das Lithiumsalz ausgewählt ist aus der Gruppe gebildet durch LiPF₆, LiClO₄, LiBF₄, LiAsF₆, Lil, LiNO₃, LiCF₃SO₃, LiN(CF₃SO₂)₂ (auch bezerichnet als Bis[(Trifluormethyl)Sulfonyl]lmid von Lithium entsprechend der Abkürzung LiTFSI), LiN(C₂F₅SO₂)₂ (auch bezeichnet als Bis[Perfluorethyl)Sulfonyl]Imid von Lithium entsprechend der Abkürzung LiBETI), LiCH₃SO₃, LiB(C₂O₄)₂ (auch bezeichnet als Bis(Oxalat)Borat von Lithium oder LiBOB) und deren Mischungen.

14. Elektrochemischer Akkumulator nach einem der vorhergehenden Ansprüche, bei dem der Elektrolyt ferner wenigstens eine Lithiumpolysulfidverbindung der Formel Li₂Sₙ umfasst, wobei n eine ganze Zahl ist, die von 2 bis 8 geht.

## Claims

1. An electrochemical accumulator of the lithium-sulfur type comprising at least one electrochemical cell that comprises:
- a positive electrode (1);
- a negative electrode; and
- an electrolyte conducting lithium ions arranged between said positive electrode and said negative electrode,
**characterized in that** the positive electrode comprises an electrically conductive substrate (3) selectively coated, over at least one of its faces, with carbon nanotubes so as to create a zone coated with carbon nanotubes, which is a carpet of carbon nanotubes (5), within which a plurality of separate zones without carbon nanotubes are arranged, these separate zones being qualified as empty (7).

2. Electrochemical accumulator according to claim 1, wherein the electrically conductive substrate (3) is selectively coated, over at least two of its faces, with carbon nanotubes so as to create, on each of said faces, a zone coated with said carbon nanotubes, which is a carpet of carbon nanotubes (5), within which a plurality of separate zones without carbon nanotubes are arranged, these separate zones being qualified as empty (7) .

3. Electrochemical accumulator according to claim 1 or 2, wherein the carbon nanotubes are perpendicular to the surface of the substrate.

4. Electrochemical accumulator according to any one of the preceding claims, wherein the empty spaces (7) are circular empty spaces.

5. Electrochemical accumulator according to any one of the preceding claims, wherein the empty spaces (7) have a larger distance greater than 10 nm, this larger distance corresponding to the maximum separation between two points defining the contour of the empty space considered in the plane of the substrate, this larger distance corresponding to the diameters of these empty spaces, when these empty spaces are circular.

6. Electrochemical accumulator according to claim 5, wherein the larger distance goes from 10 nm to 100 µm or from 50 nm to 100 µm, or more specifically, from 1 µm to 20 µm.

7. Electrochemical accumulator according to any one of the preceding claims, wherein the minimum distance between two adjacent empty spaces (i.e., the minimum separation between two points defining the contour of each of the empty spaces) goes from 20 nm to 200 µm, more specifically from 100 nm to 200 µm, still more specifically from 20 µm to 200 µm, and even more specifically from 50 µm to 100 µm.

8. Electrochemical accumulator according to any one of the preceding claims, wherein the electrically conductive substrate (3) comprises a metal material, such as aluminum.

9. Electrochemical accumulator according to any one of the preceding claims, wherein the positive electrode (1) includes a sulfurated active material deposited on the face coated with carbon nanotubes, this active material being able to be elementary sulfur, lithium disulfide Li₂S or lithium polysulfides Li₂Sₙ, with n being an integer from 2 to 8.

10. Electrochemical accumulator according to any one of the preceding claims, wherein the negative electrode comprises a current collecting substrate on which at least the active material of the negative electrode is placed, said active material being metal lithium.

11. Electrochemical accumulator according to any one of the preceding claims, wherein the electrolyte conducting lithium ions is a liquid electrolyte comprising at least one organic solvent and at least one lithium salt.

12. Electrochemical accumulator according to claim 11, wherein the organic solvent(s) are chosen from among ether solvents.

13. Electrochemical accumulator according to claim 11 or 12, wherein the lithium salt is chosen from the group made up of LiPF₆, LiClO₄, LiBF₄, LiAsF₆, LiI, LiNO₃ LiCF₃SO₃, LiN (CF₃SO₂)₂ (also called lithium bis[(trifluoromethyl)sulfonyl]imide, LiTFSI), LiN(C₂F₅SO₂)₂ (also called lithium bis[(perfluoroethyl)sulfonyl]imide, LiBETI), LiCH₃SO₃, LiB (C₂O₄)₂ (also called lithium bis(oxalato)borate, LiBOB) and mixtures thereof.

14. The electrochemical accumulator according to any one of claims 10 to 14, wherein the electrolyte further comprises at least one lithium polysulfides compound with formula Li₂Sₙ with n being an integer from 2 to 8.
